# EUROPÄISCHE PATENTSCHRIFT

(11) **EP 1 263 067 B1**
(45) Veröffentlichungstag und Bekanntmachung des Hinweises auf die Patenterteilung: **04.12.2019**
(21) Anmeldenummer: 02011728.9
(22) Anmeldetag: 27.05.2002
(51) Int. Cl.: C22C 33/02, C22C 38/00, C22C 38/22, C22C 38/28, H01M 8/021, H01M 8/0217, H01M 8/0228, H01M 8/0232, H01M 8/0236, H01M 8/0245, H01M 8/1253, H01M 8/124

(54) **Stromsammler für SOFC-Brennstoffzellen**
Current collector for SOFC fuel cells
Collecteur de courant pour piles à combustible de type SOFC

(30) Priorität: 31.05.2001 AT 4442001
(43) Veröffentlichungstag der Anmeldung: 04.12.2002
(73) Patentinhaber: PLANSEE SE, 6600 Reutte (AT)
(72) Erfinder: Glatz, Wolfgang, Dr., 6600 Reutte (AT); Janousek, Martin, Dr., 6600 Reutte (AT); Honegger, Kaspar, Dr., 8360 Wattenwil (CH)

(56) Entgegenhaltungen:
- DE-C1- 19 643 156
- JP-A- 9 157 801
- JP-A- 2000 265 248
- JP-A- 2000 294 256
- MCEVOY A J: "Thin SOFC electrolytes and their interfaces- - A near-term research strategy" SOLID STATE IONICS, NORTH HOLLAND PUB. COMPANY. AMSTERDAM, NL, Bd. 132, Nr. 3-4, 2. Juli 2000 (2000-07-02), Seiten 159-165, XP004214670 ISSN: 0167-2738
- THOMAS MALKOW: "Untersuchungen zum Langzeitverhalten von metallischen Interkonnektorwerkstoffen der Hochtemperatur-Brennstoffzelle (SOFC) im Hinblick auf die Kompatibilität mit kathodenseitigen Kontaktschichten" 30. Oktober 1998 (1998-10-30), RHEINISCH-WESTFÄLISCHEN TECHNISCHEN HOCHSCHULE AACHEN , AACHEN , XP002436526 * Seite 152 - Seite 155 *

## Beschreibung

Stromsammler aus ferritischer Eisenlegierung zum elektrischen Verbinden und zur mechanischen Stützung eines Stapels von einzelnen, eine Anode, Elektrolyt und Kathode umfassenden planaren SOFC-Hochtemperatur-Brennstoffzellen (Solid Oxide Fuel Cell), die bei Temperaturen zwischen 700°C und 900°C arbeiten und mit einem Festkörperelektrolyten ausgestattet sind.

SOFC-Hochtemperatur-Brennstoffzellen haben in den vergangenen Jahren große Entwicklungsfortschritte erfahren und stehen am Anfang einer wirtschaftlichen Verwertbarkeit. Die SOFC-Typ-Brennstoffzelle ist durch plattenförmigen Aufbau und einen festen oxidkeramischen Elektrolyten charakterisiert. Je nach Wahl der Arbeitstemperatur der Zelle im Bereich zwischen 500°C und 1000°C kommen unterschiedliche oxidkeramische Elektrolyte, beispielsweise dotiertes Zirkoniumoxid oder Ceroxid zur Anwendung. Die Zellenspannung einer einzelnen Brennstoffzelle liegt bei etwa 1 Volt, so dass zur Erreichung technisch nutzbarer elektrischer Spannungen und Leistungen stets eine Vielzahl einzelner Zellen möglichst großer Flächenabmessungen zu sogenannten "Stacks" gestapelt und elektrisch in Reihe geschaltet werden.
Tatsächlich werden heute plattenförmige Brennstoffzellenanordnungen von bis zu 1000 cm² Fläche verwendet, bei denen die Dicke der Elektroden und des Festelektrolyten regelmäßig weit unter 100 µm liegen. Die für den Wirkungsgrad der Zelle bedeutsame, möglichst geringe Elektrolytdicke liegt zwischen 5 und 30 µm. Dabei wird zwischen selbsttragenden und nicht selbsttragenden Elektrolyten, z.B. vom Typ ASE (anode supported electrolyte), unterschieden. Derartige, übereinander gestapelte plattenförmige Einzelzellen sind durch sogenannte Stromsammler, auch Verbindungselemente, Interkonnektoren oder bipolare Platte genannt, gegeneinander abgetrennt. Überwiegend werden die Zellen über offene Verteilungskanäle in den Stromsammlern mit den nötigen Brennstoffen versorgt bzw. von den reagierten Medien entsorgt und zugleich auch mechanisch stabilisiert.
Es ist daher verständlich, dass der Entwicklung geeigneter Stromsammler in den vergangenen Jahren vorrangige Aufmerksamkeit geschenkt wurde, sowohl hinsichtlich der Werkstoffauswahl, als auch hinsichtlich deren wirtschaftlicher Fertigung zu komplexen Bauteilen. Die Komplexität der Bauteile ist in erster Linie durch die meist filigranen, offenen Kanal- und Leitungssysteme für die gasförmigen Medien bestimmt.

Die Stromsammler müssen zu ihrer zufriedenstellenden Verwertbarkeit über die volle, aus wirtschaftlicher Sicht ausreichend lange Brennstoffzellen-Lebensdauer hohen Ansprüchen an eine Vielzahl mechanischer, physikalischer und chemischer Werkstoffeigenschaften entsprechen und dabei kostengünstig fertigbar sein. Die reinen Werkstoffkosten dürfen das gesamte Brennstoffzellen-System kommerziell nicht unattraktiv machen.
Die unverzichtbaren hohen Werkstoff-Qualitätsansprüche betreffen
- große mechanische Festigkeit, insbesondere hohe Steifigkeit auch dünner Stromsammlerplatten über den großen Temperaturbereich zwischen Raumtemperatur und ca. 1000°C
- höchste Anpassung des thermischen Ausdehnungskoeffizienten an den der Festelektrolytfolie: wobei diese Anpassung bei jeder Temperatur im gesamten Bereich zwischen Raumtemperatur und Arbeitstemperatur gleichermaßen gegeben sein muss
- hohe thermische und elektrische Leitfähigkeit, geringer elektrischer Oberflächen-Übergangswiderstand insbesondere auch Beibehaltung dieser Werte über die volle Lebensdauer einer Brennstoffzelle
- hohe Korrosionsbeständigkeit des Werkstoffes gegen die Brenngas- und Abgasatmosphären der Zelle, das sind anodenseitig im Wesentlichen Wasserstoff und H₂O-Dampf, CO und CO₂, kathodenseitig im Wesentlichen Sauerstoff bzw. Luft.

Die Entwicklung von geeigneten Werkstoffen für Stromsammler konzentrierte sich zunächst auf Chromlegierungen und verlagerte sich in den letzten Jahren auf ferritische Eisenlegierungen mit wesentlichen Chromanteilen.
Bei den Bemühungen zur weiteren Verfeinerung der vorgeschlagenen ferritischen Legierungen für Stromsammler in SOFC-Typ-Brennstoffzelleneinheiten galt es, die Bildung flüchtiger Chromverbindungen und deren Abdampfung von der Stromsammleroberfläche bestmöglich zu unterbinden. Als Gegenmaßnahme wurde beispielsweise die Zugabe geeigneter Mengen von Titan und Mangan vorgeschlagen.

Selbst bei den als korrosionsfest bekannten ferritischen Werkstoffen lässt sich ein oberflächliches Oxidwachstum nicht völlig vermeiden. Zur Verringerung der Oxidwachstumsrate, gleichzeitig aber auch zur mechanischen Festigkeitssteigerung wurde die Zugabe kleiner Mengen der Elemente Yttrium, Cer, Lanthan, Zirkon und/oder Hafnium vorgeschlagen.

Der Fachmann stützt sich bei derartigen Werkstoff-Entwicklungen auf theoretische und empirische Kenntnisse über die Wirkung einzelner metallischer und nicht metallischer Komponenten. Bereits bekannte ferritische Eisenbasis-Werkstoffe mit einer Vielfalt heute vorbeschriebener Zusätze, machen angesichts des erreichten Standes bei den Anpassungsanforderungen an die Vielzahl höchst unterschiedlicher Materialeigenschaften eine Voraussage über Maßnahmen zur weiteren Eigenschaftsanpassungen unmöglich, bzw. sind eher zweifelhaft.
Der gesicherte Stand der Technik bildet eine wichtige Plattform, aber keinen zuverlässigen Wegweiser für derartige Werkstoff-Weiterentwicklungen.

So beschreibt die EP 0 880 802 B1 eine Hochtemperatur-Brennstoffzelle mit stabilisiertem Zirkoniumoxid als Feststoffelektrolyt, bei dem die Stromsammler aus einer Eisenbasis-Legierung mit 17 bis 30 Gew.% Chrom bestehen, derart, dass dieser Werkstoff einen thermischen Ausdehnungskoeffizienten zwischen 13 und 14 x 10⁻⁶ K⁻¹ aufweist.
Ein solcherart charakterisierter Werkstoff für Stromsammler ist angesichts des heute erreichten Standes an Eigenschaftsanpassungen ohne richtungsweisende Bedeutung. Auch hinsichtlich der thermischen Ausdehnungskoeffizienten sind heute verfeinerte Anforderungskriterien, z.B. im Hinblick auf Ausgestaltung und Werkstoff des jeweils verwendeten Festelektrolyten gültig.

Die EP 0 767 248 A1 beschreibt ein oxidationsbeständiges metallisches Material, insbesondere auch für die Verwendung in Stromsammlern für Hochtemperatur-Brennstoffzellen, der Zusammensetzung: 15 bis 40 Gew.% Chrom, 5 bis 15 Gew.% Wolfram, 0,01 bis 1 Gew.% von einem oder mehreren Elementen, ausgewählt aus der Gruppe Y, Hf, Ce, La, Nd und Dy, Rest Eisen, welches Material einen thermischen Ausdehnungskoeffizienten von mehr als 12 x 10⁻⁶ und weniger als 13 x 10⁻⁶ K⁻¹ im Temperaturbereich zwischen Raumtemperatur und 1000°C aufweist.
Alternativ enthält dieser Werkstoff zusätzlich zwingend 0,001 bis 0,01 Gew.% Bor.
In der Schrift ist ausgesagt, dass dieser Werkstoff speziell auf eine Verwendung in Kombination mit Zirkoniumoxid als Festelektrolyt bei Arbeitstemperaturen zwischen 900°C und 1000°C abgestellt ist.
In einer nach dem Prioritätstag erschienenen Arbeit der beiden Erfinder (M. Ueda, H. Taimatsu, Thermal Expansivity and High-Temperature Oxidation Resistance of Fe-Cr-W Alloys Developed for a Metallic Separator of SOFC, 4th European SOFC Forum Luzern, 10. - 14. Juli 2000) wird sehr kritisch über Schwierigkeiten und Nachteile des besagten Werkstoffes als Stromsammler berichtet. Legierungen mit mehr als 18 Gew.% Cr gelten als schlecht bearbeitbar. Es wird über auf dem Werkstoff durch Korrosion gebildeten Schichten berichtet, die abplatzen.
Der thermische Ausdehnungskoeffizient der Legierung konnte trotz probeweiser Nutzung der Cr- und W-Anteile in der vollen Breite des Schutzumfanges der Legierung nicht zufriedenstellend an den Wert für yttriumstabilisierte ZrO₂-Festelektrolyte angeglichen werden. Entsprechend neuer Messungen variiert diese Stoffkonstante im Temperaturbereich 20° bis 1000°C kontinuierlich zwischen 11,7, 10,8 und wieder 11,7x 10⁻⁶K⁻¹.
Die Oxidationsbeständigkeit vor allem gegenüber dem im Zellenbetrieb anodenseitig vorliegenden heißen H₂/H₂O-Dampf Atmosphäre wurde als unbefriedigend ermittelt.

Verschiedene Zusammensetzungen ferritischer Stähle für den Einsatz in Stromsammlern sind in den Druckschriften JP 09 157801 A, JP 2000 294256 A und JP 2000 265248 A beschrieben.

Aufgabe vorliegender Erfindung ist es, einen ferritischen Werkstoff für Stromsammler in Hochtemperatur-Brennstoffzellen mit Feststoffelektrolyt bereitzustellen, der den hohen und vielfältigen, eingangs genannten Eigenschaftsanforderungen besser entspricht als bekannte Werkstoffe. Der Werkstoff soll insbesondere bessere Korrosionsbeständigkeit gegenüber den Brenngas- und Abgasatmosphären besitzen. Dabei soll es gleichzeitig ein möglichst konstanter, niedriger elektrischer Übergangswiderstand zwischen Stromsammlern und Zellenelektroden über lange Zeiträume gegeben sein, wenn diese in Zellenanordnung im flächigen Kontakt miteinander stehen. Der Werkstoff soll weiterhin einen gut angepassten thermischen Ausdehnungskoeffizienten an diejenigen bekannter SOFC-Feststoffelektrolyte und Elektrodenmaterialien für Mitteltemperatur-Brennstoffzellen im Arbeitsbereich zwischen 700°C und 900°C besitzen.

Die Aufgabe wird erfindungsgemäß durch einen Stromsammler gelöst, welcher aus einer ferritischen Eisenlegierung besteht, die neben üblichen Verunreinigungen aus 22 bis 32 Gew.% Cr, 1 bis 10 Gew.% Mo, und 0,01 bis 1,5 Gew.% Yttrium und/oder Seltenerdmetallen und/oder deren Oxiden, wahlweise 0,1 bis 3 Gew.% von einem oder mehreren der Metalle aus der Gruppe Nb, Ti, Ni und Mn, Rest Fe, besteht, wobei der Fe-Gehalt mehr als 68 Gew.% beträgt.

Besonders vorteilhafte Ausgestaltungen des erfindungsgemäßen Stromsammlers sind in den Unteransprüchen beschrieben.

Der ferritische Eisenwerkstoff gemäß Erfindung genügt allen für SOFC-Hochtemperatur-Brennstoffzellen weiter vorne genannten Eigenschaftsanforderungen in hohem Maße.
Der erfindungsgemäße Werkstoff zeigt gute Übereinstimmung seines thermischen Ausdehnungskoeffizienten mit denjenigen von oxidischen Festelektrolytwerkstoffen wie sie heute üblicherweise für Hochtemperatur-Brennstoffzellen eingesetzt werden - insbesondere auch mit dem im Arbeitsbereich 700°C bis 900°C als Elektrolyt verwendeten, gadolineumstabilisierten Ceroxid mit einem thermischen Ausdehnungskoeffizienten von 12,5 x 10⁻⁶K⁻¹ bei 800°C, 12,7 x 10⁻⁶ K⁻¹ bei 900°C. Der sich temperaturabhängig ändernde Wert für die thermische Ausdehnung stimmt bei jeder Temperatur zwischen Raumtemperatur und 900°C mit dem Wert üblicherweise verwendeter oxidischer Festelektrolyte sehr gut bis zufriedenstellend überein.

Die Bewertung "sehr gut bis zufriedenstellend" berücksichtigt den Kompromiss die hinsichtlich Optimierung unterschiedlicher Stoffeigenschaft, wie thermischer Ausdehnungskoeffizient und elektrischer Übergangswiderstand, über den fallweise zu entscheiden ist.
Wie nachfolgend dargestellt wird, ist die erfindungsgemäße Legierung vornehmlich ausgerichtet auf einen minimalen Kompromiss hinsichtlich Korrosionsverhalten und dem damit zusammenhängenden elektrischen Übergangswiderstand an der Werkstoffoberfläche.
Mäßige Kompromisse hinsichtlich den thermischen Ausdehnungskoeffizienten vom Stromsammler führen gleichwohl zu uneingeschränkt guten Zellenfunktionen, wenn man sich der heute geläufigen ASE-Technik bedient, wie folgt.
Die Festelektrolytfolie kleiner Dicke ist nicht mehr selbsttragend, sondern der Festelektrolyt wird als nicht selbsttragende Folie direkt auf eine Elektrodenoberfläche als Trägerwerkstoff aufgebracht, z.B. als ASE (anode supported electrolyte) Verbundkomponente. Je dünner eine Folie, desto elastischer ist sie. So werden unterschiedliche thermische Ausdehnungskoeffizienten der flächig aneinanderliegenden Zellenkomponenten - in begrenztem Umfang - kompensiert, ohne dass die Folie Gefahr läuft einzureißen.

Neben der für Stromsammlerwerkstoffe unverzichtbar guten Anpassung der thermischen Ausdehnungskoeffizienten ergibt sich für den erfindungsgemäßen ferritischen Eisenwerkstoff als bedeutsamster Vorteil verglichen mit dem Stand der Technik, eine gegenüber den Brenn- und Abgasatmosphären im Temperaturbereich 700°C bis 900°C überraschende, nicht vorhersehbar hohe Korrosionsbeständigkeit bei gleichzeitiger Ausformung vorteilhafter Oxidationsprodukte im Oberflächenbereich des ferritischen Werkstoffes.

### Figuren:

- Fig. 1:: Vergleich Oxidschichtdicke in 20% H₂ / 80% H₂O (CRF: keine Daten für 800°C, respektive 900°C), und
- Fig. 2:: Vergleich Oxidschichtdicke in Luft (Fe26Cr (446): ab 800°C beginnende Abplatzung, bei 900°C fällt Oxidschicht ab).

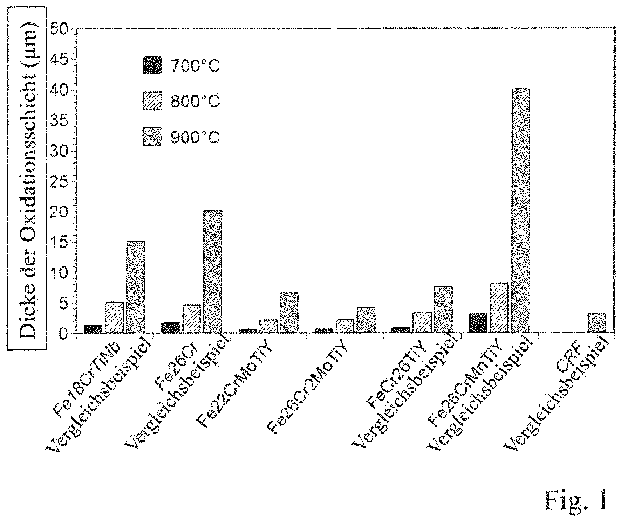

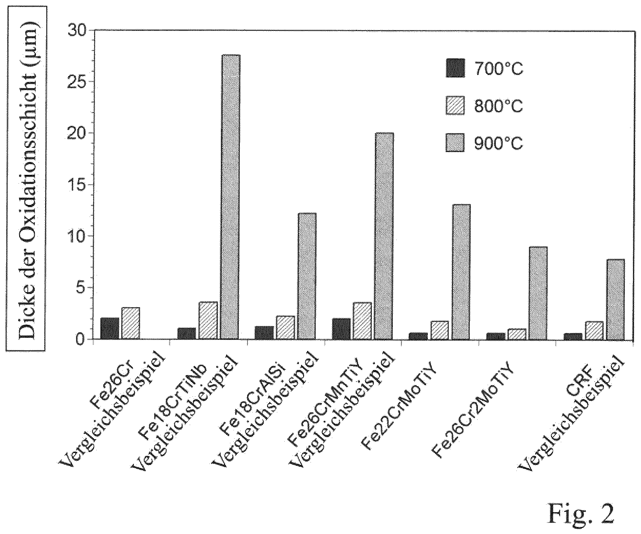

Die nachfolgenden Abbildungen 1 und 2 zeigen das Oxidationsverhalten von Ausgestaltungen der erfindungsgemäßen ferritischen Eisenbasislegierung im Vergleich mit für Stromsammler vorbeschriebenen ferritischen Stählen, aber auch gegenüber einer für Stromsammler verbreitet verwendeten Chrombasislegierung (Abkürzung: CRF), und zwar
- nach Oxidation während 500 Stunden in Luft bei 700°C, 800°C und 900°C (Abb. 2) sowie
- nach Oxidation während 650 Stunden in einer Atmosphäre von 80 Vol.% H₂O / 20 Vol.% H₂, ebenfalls bei 700°C, 800°C und 900°C (Abb. 1).
Als Maß für das abgebildete Oxidationsverhalten gilt die Dicke der in diesem Zeitraum gebildeten Oxidationsschicht.
Keiner der Vergleichswerkstoffe reicht in seiner Oxidationsbeständigkeit an die erfindungsgemäße ferritische Legierung heran - der hochchromhaltige Werkstoff CRF ist aus Preisgründen nicht vergleichbar und wird bei Zellentemperaturen zwischen 900°C und 1000°C eingesetzt.
Der Vergleichswerkstoff Fe26Cr lieferte bei 900°C keinen brauchbaren Wert. Die gebildeten Oxidschichten waren bereits von der Oberfläche abgeplatzt.

Neben der Dicke der Oxidationsschicht selbst ist weiters die Haftung der Oxidationsschicht auf dem darunterliegenden Substrat-Kernmaterial von Wichtigkeit und diese ist bei den erfindungsgemäßen Werkstoffen deutlich verbessert gegenüber bekannten ferritischen Werkstoffen, insbesondere solchen mit Legierungsanteilen von Aluminium und/oder Silizium.

Die Legierung gemäß Erfindung bildet unter der korrodierenden Wirkung einer echten Zellenatmosphäre, d.h. in Anwesenheit auch von Wasserdampf Oxidschichten aus, die einen vorteilhaften, höchst überraschenden Einfluss nehmen auf die Menge des auch bei der erfinderischen Legierung unvermeidlich von der Stromsammler Oberfläche abdampfenden Chroms.

Diesem für die Zellenlebensdauer äußerst kritischen Korrosionseinfluss wurde in der bisher zugänglichen Literatur keine angemessene Aufmerksamkeit geschenkt. Veröffentlichte Daten beschreiben ausschließlich das Korrosionsverhalten der untersuchten Werkstoffe gegenüber Luft oder Sauerstoff.
Der Abdampfmechanismus ist Folgender. Bei allen Legierungen mit höheren Chromanteilen bildet sich auf den Oxidschichten eine flüchtige Chromhydroxidschicht. Oberflächlich abdampfendes Chrom wird aus dem Werkstoffinneren ersetzt. Anders als bei Legierungen gemäß Erfindung, führte dies bei vorbekannten chromhaltigen Legierungen vielfach zu so hohen Chromverlusten, dass dadurch die Legierung und in der Folge deren Eigenschaften höchst unerwünscht verändert wurden.

Die stark reduzierte Chromabdampfung macht es gleichwohl erforderlich, die untere Grenze des Legierungselementes Chrom mit 22 Gew.% festzulegen, um die durch Chrom erzielten, vorteilhaften Legierungseigenschaften nicht zu gefährden.

Der Orientierung dienenden Untersuchungen zufolge, sind die auf der Legierung gemäß Erfindung je nach Korrosionstemperatur gebildeten unterschiedlichen Oxidschichten üblicherweise mehrlagig.
Bevorzugt wird auf dem Substrat eine dünne Cr₂O₃-Schicht gebildet, gefolgt von einer Schicht aus Spinellen der Metalle Fe, Cr, Mn, Ti, Nb, Y, welche unerwartet niedrige und über die Zellenlebensdauer vergleichsweise konstante elektrische Übergangswiderstände aufweisen.
Eisen als Legierungselement enthält regelmäßig Mn als Verunreinigung, wodurch regelmäßig Mangan enthaltende Oxidschichten kleinen Übergangswiderstandes gebildet werden.

Wahlweise werden der Legierung gemäß Erfindung zur Beeinflussung der gewünschter Oxidformationen daher auch kleine Anteile an einem oder mehreren der Metalle Ti, Mn, Nb, Ni und/oder Y, meist weit unter 1 Gew.%, zugegeben.

Der erfindungsgemäße ferritische Werkstoff begünstigt die Ausbildung einer gut haftenden inneren Cr₂O₃-Schicht unmittelbar anschließend an das Basismaterial und die Formierung einer darüberliegenden äußeren Oxidschicht, z.B. Mn-Cr-Spinell.
Gut haftende Oxidschichten besitzen aber im Unterschied zu schlecht haftenden, bzw. lokal vom Substrat abgehobenen oder gar abplatzenden Oxidschichten, einen vergleichsweise geringen elektrischen Übergangswiderstand zum Werkstoffinnerem zeigen.

Eine bisher noch zu wenig beachtete Größe für die Brauchbarkeit des Stromsammler-Werkstoffes in Hochtemperatur-Brennstoffzellen, bzw. für die einer Zelle entnehmbare elektrische Leistung, ist ein möglichst kleiner elektrischer Übergangswiderstand vom Stromsammler im flächigen Kontakt zu den angrenzenden Elektrodenmaterialien. Die erfindungsgemäße Legierung formt nicht nur dünne Oxidschichten, sondern Oxide, insbesondere auch Spinelle, mit einer für diese Anwendung vorteilhaften elektrischen Restleitfähigkeit aus.

Als Entwicklungsvorgabe war vorgeschlagen worden, den thermischen Ausdehnungskoeffizienten ferritischer Stähle durch entsprechende Zusätze von einem oder mehreren der hochschmelzenden Metalle Wolfram, Molybdän, Niob oder Tantal an die Erfordernisse des Festelektrolyten anzupassen. In der vorliegenden erfindungsgemäßen Legierung lässt sich der geforderte thermische Ausdehnungskoeffizient im wesentlichen durch den Chromgehalt anpassen, ohne den Chromgehalt indes so hoch wählen zu müssen, dass die bekannten Nachteile eisenhaltiger Chromlegierungen als Stromsammler überwiegen. Beim ferritischen Werkstoff gemäß Erfindung erfüllt der vergleichsweise kleine Anteil an dem hochschmelzenden Metall Molybdän die Funktion einer thermischer Koeffizientenangleichung. Das führte zu der überraschenden Erkenntnis, dass schon ein verhältnismäßig kleiner Molybdänanteil ab 1 Gew.% in der erfindungsgemäßen Legierungszusammensetzung die obengenannten unerwarteten Steigerungen der Korrosionsfestigkeit, sowie weiterer physikalisch chemischer Eigenschaften zur Folge hat.

Der Anteil an Seltenerdelementen bzw. deren Oxide zum ferritischen Eisenbasiswerkstoff gemäß Erfindung ist hinsichtlich der dispergierenden und damit festigkeitssteigernden Eigenschaften bekannt. Offensichtlich üben die Seltenerdoxide als Bestandteil der erfinderischen Legierung darüber hinaus einen nicht vorhergesehenen, stabilisierenden Einfluss auf die sich korrosionsbedingt bildenden Oberflächenoxide und deren physikalische Eigenschaften aus.

Für die wahlweise Zugabe zur erfindungsgemäßen Legierung haben sich geringe Mengen an Niob bis zu einigen Gew.% besonders bewährt. Sie stabilisieren den elektrischen Kontakt, bzw. den günstigen elektrischen Übergangswiderstand zwischen Elektrodenmaterial und Stromsammler bei den Temperaturen zwischen 700°C und 900°C unter üblichen Einsatzbedingungen für die volle Lebensdauer einer Brennstoffzelle, die heute mit Minimum 40.000 Stunden festgelegt ist.

Unter den erfindungsgemäßen Werkstoffen für Stromsammler hat sich die Legierung 26 Gew.% Chrom, 2 Gew.% Molybdän, 0,3 Gew.% Titan, 0,5 Gew.% Yttriumoxid, Rest Eisen, weiters die Legierung 22 Gew.% Chrom, 2 Gew.% Molybdän, 0,3 Gew.% Titan, 0,5 Gew.% Yttriumoxid, Rest Eisen, aber auch 26 Gew.% Cr, 2 Gew.% Mo, 0,3 Gew.% Ti, 0,4 Gew.% Nb, 0,5 Gew.% Y₂O₃, Rest Eisen, besonders bewährt.

Stromsammler werden heute üblicherweise als Metallplatten ausgeführt, in deren Oberfläche eine Vielzahl von offenen Leitungskanälen für die Brennstoff- und Abgasatmosphären der Brennstoffzelle eingearbeitet sind. Meist sind diese Kanalsysteme sehr filigran ausgeführt. Derartige Stromsammlerplatten werden beispielsweise in der bereits frühere genannten EP 0 880 802, Figur 2, dargestellt.
Üblicherweise werden derartige Stromsammlerplatten aus erschmolzenen Legierungen gefertigt, wobei die filigranen Kanalsysteme durch kostenintensive spanabhebende und/oder elektrochemische Bearbeitung in die Plattenoberfläche eingebracht werden.
In jüngerer Zeit ist jedoch auch die Herstellung von Stromsammlern mit derartiger Kanalsystemen auf pulvermetallurgischem Wege bekannt geworden. Wegen der hohen geometrischen Präzision, mit der Stromsammlerplatten üblicherweise gefertigt werden müssen, bedarf die pulvermetallurgische Fertigung einer sehr sorgfältigen Abstimmung von dafür wirtschaftlich einsetzbaren Legierungszusammensetzungen mit geeigneten pulvermetallurgischen Herstellungsverfahren.
Es werden nach diesem Verfahren weitgehend dichte, aber auch hochporöse Stromsammler gefertigt.
Die zur Gasführung benötigten Kanalsysteme im Stromsammler werden entweder in endkonturnaher Ausführung bereits mit dem Günlingpressen und vor dem Sintern gefertigt, oder auch mechanisch oder elektrochemisch aus einem kompakten Sinterrohling herausgearbeitet. Vielversprechend ist ein Verfahren, nach dem ein Sinterrohling zu Blechen gewalzt und die Stromsammlerendform mit Gaskanälen durch Stanzen und Prägen des Bleches erzeugt wird. Dieses Verfahren erlaubt besonders dünnwandige Stromsammlerausformungen.
Bei den hochporösen Ausgestaltungen eines Stromsammlers dienen die offenen Porensysteme zur Gasführung und -verteilung.
Die erfindungsgemäße ferritische Eisenbasislegierung ist für die Herstellung von Stromsammlerplatten nach pulvermetallurgischen Verfahren besonders gut geeignet.
Die Fertigung eines erfindungsgemäßen Stromsammlers wird an Hand der nachfolgenden Beispiele näher erläutert:

### Beispiel 1

Der erfindungsgemäße Werkstoff der Zusammensetzung Fe, 22 Gew.% Chrom, 2 Gew.% Mo, 0,29 Gew.% Ti, 0,37 Gew.% Y wird auf pulvermetallurgischem Wege zum Stromsammlerbauteil verarbeitet.

Dazu werden Pulver einer Fe-Y-Vorlegierung mit den Metallpulvern der übrigen Legierungsbestandteile vermischt. die Legierungspulver besitzen eine Kornfraktion im Bereich von 30 bis 160 µm und werden während des Mischens mit Presshilfsmitteln versetzt. Die so erhaltene Pulvermischung wird in Pressformen bei einem Pressdruck von 8t/cm² zu endformnahen Stromsammlerplatte verpresst. In dem Pressling sind demzufolge alle auf der Plattenoberfläche verlaufende Kanalsysteme für die gasförmigen Medien bereits ausgeformt. Die weitere Verarbeitung der Grünlinge zu fertigen Stromabnehmerplatten erfolgt mittels Sintern bei Temperaturen von 1400°C in Wasserstoffatmosphäre. Die so erhaltenen Stromsammlerplatten erhalten fallweise eine nicht mechanische Nachbehandlung, ehe sie zu Brennstoffzelleneinheiten zusammengebaut werden.

### Beispiel 2

Eine Legierung der Zusammensetzung Fe, 26 Gew.% Cr, 2 Gew.% Mo, 0,25 Gew.% Y, enthält als Verunreinigungen 0,08 Gew.% Mn 0,05 Gew.% Nb. Diese Legierung wird auf pulvermetallurgischem Wege zu einem zylindrischen Grünling verpresst und der Grünling wird anschließend durch Sintern in H₂-Atmosphäre bei 1400°C zum Sinterrohling verarbeitet. Der Sinterrohling wird in Scheiben geschnitten und die oberflächlichen Gasleitungskanäle werden mittels mechanischer oder elektrochemischer Verfahren gefertigt. Zwei derart gefertigte Stromsammler als Deckplatten werden mit den dünnen Folien aus Anoden- und Kathodenmaterialien sowie mit einem Gadolineumoxid stabilisierten Ceroxid SOFC-Elektrolyt zu einer Zelleneinheit verarbeitet und bei einer Zellentemperatur von 800°C unter den üblichen Brenngas- und Abgasatmosphären während 650 Stunden Betriebszeit getestet. Dabei wurden neben der mechanischen Stabilität der einzelnen Zellenkomponenten vor allem die Korrosionseigenschaften der Stromsammlerplatten eingehend untersucht. Die ermittelten Korrosionswerte entsprechen den in den Abbildungen 1 und 2 dargestellten Werte.

Die vorliegende Erfindung ist nicht auf das vorgenannte Ausführungsbeispiel beschränkt, sie schließt vielmehr andere für den Fachmann ohne weiteres als vom Erfindungsgegenstand mit umfasste Ausführungen wie beispielsweise aus heißisostatisch gepresstem (HIP) Vormaterial gefertigte Komponenten mit ein.

## Patentansprüche

1. Stromsammler aus ferritischer Eisenlegierung zum elektrischen Verbinden und zur mechanischen Stützung eines Stapels von einzelnen, eine Anode, Elektrolyt und Kathode umfassenden planaren SOFC-Hochtemperatur-Brennstoffzellen, die bei Temperaturen zwischen 700°C und 900°C arbeiten und mit einem Festkörperelektrolyten ausgestattet sind,
**dadurch gekennzeichnet,**
**dass** die ferritische Eisenlegierung neben üblichen Verunreinigungen aus 22 bis 32 Gew.% Cr,
1 bis 10 Gew.% Mo, und
0,01 bis 1,5 Gew.% Yttrium und/oder Seltenerdmetallen und/oder deren Oxiden,
wahlweise 0,1 bis 3 Gew.% von einem oder mehreren der Metalle aus der Gruppe Nb, Ti, Ni und Mn,
Rest Fe, besteht, wobei der Fe-Gehalt mehr als 68 Gew.% beträgt.

2. Stromsammler aus ferritischer Eisenlegierung nach Anspruch 1, **dadurch gekennzeichnet, dass** die ferritische Eisenlegierung aus 22 Gew.% Cr, 2 Gew.% Mo, 0,3 Gew.% Ti, 0,5 Gew.% Y₂O₃, Rest Eisen besteht.

3. Stromsammler nach Anspruch 1, **dadurch gekennzeichnet, dass** die ferritische Eisenlegierung aus 26 Gew.% Cr, 2 Gew.% Mo, 0,3 Gew.% Ti, 0,5 Gew.% Y₂O₃, Rest Eisen besteht.

4. Stromsammler nach Anspruch 1, **dadurch gekennzeichnet, dass** die ferritische Eisenlegierung aus 26 Gew.% Cr, 2 Gew.% Mo, 0,3 Gew.% Ti, 0,4 Gew.% Nb, 0,5 Gew.% Y₂O₃, Rest Eisen, besteht.

5. Stromsammler aus ferritischer Eisenlegierung nach einem der Ansprüche 1 bis 4, **dadurch gekennzeichnet, dass** dieser in endkonturnaher Ausführung mittels pulvermetallurgischer Verfahren gefertigt ist.

## Claims

1. A current collector made from ferritic iron alloy for electrically connecting and mechanically supporting a set of individual, planar SOFC high-temperature fuel cells which comprise an anode, electrolyte and cathode, operate at temperatures of between 700°C and 900°C and are equipped with a solid electrolyte,
**characterized in that**
the ferritic iron alloy consists of, besides standard impurities,
22 to 32% by weight of Cr,
1 to 10% by weight of Mo, and
0.01 to 1.5% by weight of yttrium and/or rare earths and/or oxides thereof,
optionally 0.1 to 3% by weight of one or more metals of the group consisting of Nb, Ti, Ni and Mn,
remainder Fe, wherein the content of Fe is more than 68% by weight.

2. The current collector made from ferritic iron alloy according to claim 1, **characterized in that** the ferritic iron alloy consists of 22% by weight of Cr, 2% by weight of Mo, 0.3% by weight of Ti, 0.5% by weight of Y₂O₃, remainder iron.

3. The current collector according to claim 1, **characterized in that** the ferritic iron alloy consists of 26% by weight of Cr, 2% by weight of Mo, 0.3% by weight of Ti, 0.5% by weight of Y₂O₃, remainder iron.

4. The current collector according to claim 1, **characterized in that** the ferritic iron alloy consists of 26% by weight of Cr, 2% by weight of Mo, 0.3% by weight of Ti, 0.4% by weight of Nb, 0.5% by weight of Y₂O₃, remainder iron.

5. The current collector made from ferritic iron alloy according to one of claims 1 to 4, **characterized in that** it is produced near net shape by means of powder metallurgy processes.

## Revendications

1. Collecteur de courant composé d'alliage de fer ferritique pour la liaison électrique et pour le support mécanique d'un empilement de piles à combustibles planes à haute température de type SOFC (solid oxide fuel cell - pile à combustible à oxydes solides) individuelles comprenant une anode, un électrolyte et une cathode, qui travaillent à des températures comprises entre 700 °C et 900 °C et qui sont équipées d'un électrolyte solide,
**caractérisé en ce**
**que** l'alliage de fer ferritique est constitué, mises à part des impuretés habituelles, de
22 à 32 % en poids de Cr,
1 à 10 % en poids de Mo, et
0,01 à 1,5 % en poids d'yttrium et/ou de métaux des terres rares et/ou de leurs oxydes,
éventuellement 0,1 à 3 % en poids d'un ou plusieurs des métaux du groupe Nb, Ti, Ni et Mn,
le reste étant Fe, la teneur en Fe étant supérieure à 68 % en poids.

2. Collecteur de courant composé d'alliage de fer ferritique selon la revendication 1, **caractérisé en ce que** l'alliage de fer ferritique est constitué de 22 % en poids de Cr, 2 % en poids de Mo, 0,3 % en poids de Ti, 0,5 % en poids de Y₂O₃, le reste étant Fe.

3. Collecteur de courant selon la revendication 1, **caractérisé en ce que** l'alliage de fer ferritique est constitué de 26 % en poids de Cr, 2 % en poids de Mo, 0,3 % en poids de Ti, 0,5 % en poids de Y₂O₃,le reste étant Fe.

4. Collecteur de courant selon la revendication 1, **caractérisé en ce que** l'alliage de fer ferritique est constitué de 26 % en poids de Cr, 2 % en poids de Mo, 0,3 % en poids de Ti, 0,4 % en poids de Nb, 0,5 % en poids de Y₂O₃,le reste étant Fe.

5. Collecteur de courant composé d'alliage de fer ferritique selon l'une des revendications 1 à 4, **caractérisé en ce qu'**il est fabriqué avec une finition ayant une forme presque finale au moyen d'un procédé de métallurgie des poudres.
